Europäisches Patentamt

(19) European Patent Office

Office européen des brevets

(11) Publication number: **0 235 251**
**B1**

(12) **EUROPEAN PATENT SPECIFICATION**

(45) Date of publication of patent specification: **17.10.90**

(21) Application number: **86905512.9**

(22) Date of filing: **15.08.86**

(86) International application number:
**PCT/US86/01681**

(87) International publication number:
**WO 87/01480 12.03.87 Gazette 87/06**

(51) Int. Cl.⁵: **G 06 F 3/023**

(54) **SOUND GENERATING SYSTEM FOR A KEYBOARD.**

(30) Priority: **03.09.85 US 772224**

(43) Date of publication of application:
**09.09.87 Bulletin 87/37**

(45) Publication of the grant of the patent:
**17.10.90 Bulletin 90/42**

(84) Designated Contracting States:
**DE FR GB**

(56) References cited:
**GB-A-1 582 507**
**US-A-3 541 548**
**US-A-4 482 888**

**Patents Abstracts of Japan, volume 8, no. 269
(P-319)(1706), 8 December 1984
Patents Abstracts of Japan, volume 9, no. 23
(E-293)(1746), 30 January 1985**
(73) Proprietor: **NCR CORPORATION
World Headquarters
Dayton, Ohio 45479 (US)**

(72) Inventor: **SEEVERS, Daniel
630 Edgeworth Lane
Cambridge, OH 43725 (US)**
Inventor: **ROHULICH, John
415 North Fifteen Street
Cambridge, OH 43725 (US)**

(74) Representative: **Robinson, Robert George
International Patent Department NCR Limited
206 Marylebone Road
London NW1 6LY (GB)**

Courier Press, Leamington Spa, England.

## Description

Technical Field

The present invention is directed to keyboards associated with data terminal devices or other electronic devices. The invention has application, for example, to a system for generating a tone signal representing the actuation of a key portion of a membrane-type or other type of keyboard that operates without tactile feedback.

Background Art

With the advent of computers, hand-held calculators and the like, electronic keyboards have been developed in which the keyboard switches take the form of two membrane-type members making contact to provide a signal indicating the key position that has been actuated. The signal thus generated is normally decoded to generate binary data signals representing the actuated key. Prior mechanical type keyboards associated with cash registers or the like were constructed of key switch mechanisms which, when actuated, generated a feedback tone or click indicating the closing of a switch. With membrane type electronic keyboards, such audio feedback is not present. In order to provide such feedback, audio generators have been incorporated into electronic keyboards to provide an audio feedback tone representing a click sound which occurs upon depressing a key member of a keyboard. Audio generators are known in which volume (loudness) control has been provided by either a switch or a rheostat. Problems have been experienced with such known audio generators in that they may not provide the required volume levels where the noise environment in which the electronic keyboards are used and the hearing capacity of the keyboard operators varies.

An example of known audio generator can be found in United States Patent No. 3,541,548.

Disclosure of the Invention

It is an object of this invention to provide a sound generating system for a keyboard which system can have a simple mechanical construction and can be selectively set by the operator to provide a plurality of volume levels to compensate for the noise environment in which keyboard is used and/or the hearing capacity of the operator.

According to the invention there is provided a keyboard sound generating system including a keyboard, and tone generating means arranged to generate a tone in response to actuation of a key member of said keyboard, characterized in that said tone generating means is arranged to generate a tone whose volume level is determined by the frequency of an input pulse signal applied thereto, and in that said keyboard is settable to operate in a normal operating mode or in a volume setting mode and includes a plurality of multi-function key members which can operate in a normal operating mode or in a volume setting mode depending on the mode of operation to which said keyboard has been set, and further characterized by encoding means coupled to said multi-function key members for generating identifying data which identifies an activated multi-function key member when said keyboard is in said volume setting mode, and processing means coupled to said encoding means and to said tone generating means and arranged to produce an output pulse signal in response to identifying data generated by said encoding means, the frequency of said output pulse signal being determined by the actuated multi-function key member corresponding to the generated identifying data, and said processing means being arranged to apply said output pulse signal to said tone generating means so as to determine the volume level of tones generated thereby, the volume level determined by the last operated multi-function key member when said keyboard is in a volume setting mode remaining unchanged when said keyboard is next set to the normal operating mode.

It will be appreciated that a keyboard sound generating system in accordance with the present invention has a simplified mechanical construction in that no separate mechanical volume control, such as a rheostat or mechanical switch, is required.

Brief Description of the Drawings

One embodiment of the invention will now be described by way of example with reference to the accompanying drawings, in which:

Fig. 1 is a block diagram of a keyboard sound generating system in accordance with the present invention;

Fig. 2 is a schematic diagram of a keyboard included in the system in accordance with the present invention;

Fig. 3 is a schematic representation of the frequency response curve of a tone generator used in the system in accordance with present invention;

Fig. 4 is a block diagram of a processor included in the system in accordance with the present invention;

Fig. 5 is a schematic representation of a tone generator and an associated control circuit used in the system in accordance with the present invention;

Fig. 6 is a schematic representation of a pulse signal for controlling the output frequency of the tone generator of Fig. 5;

Fig. 7 is a flow diagram of the process for putting the keyboard of Fig. 2 into a volume setting mode;

Fig. 8 is a more detailed flow diagram of the process for changing the volume output of the tone generator of Fig. 5.

Best Mode for Carrying Out the Invention

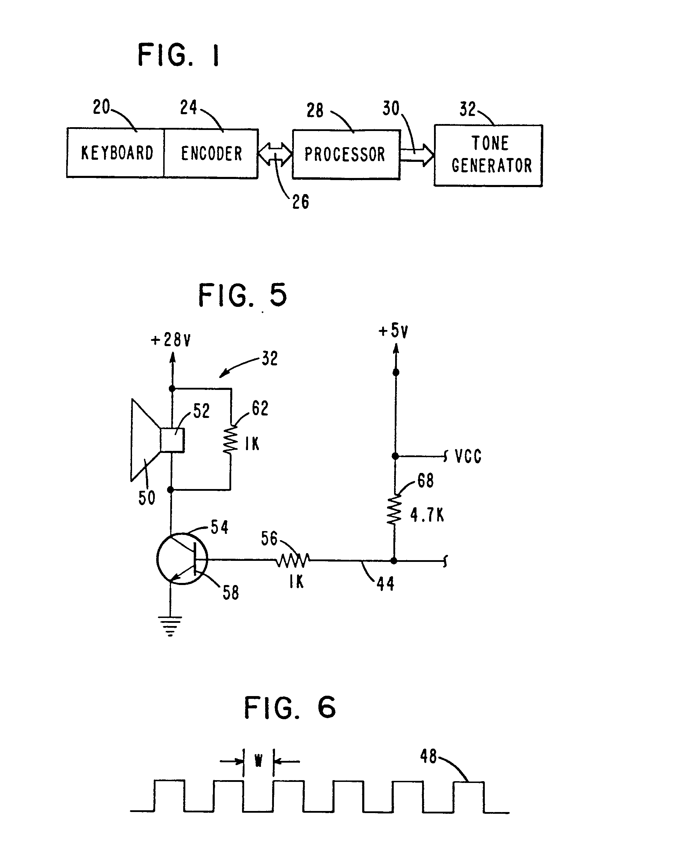

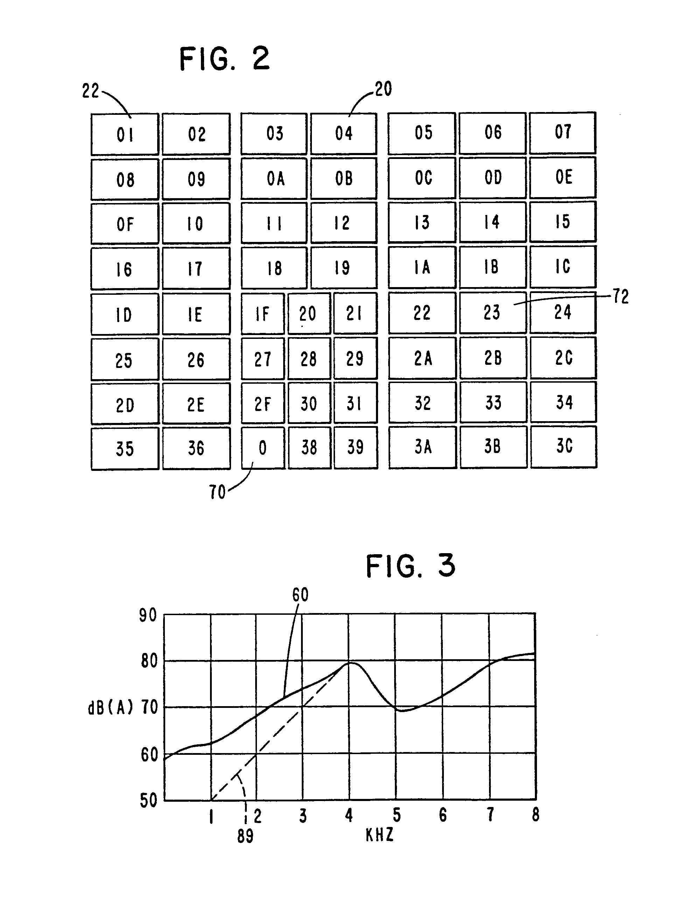

Referring now to Fig. 1, the keyboard sound generating system disclosed therein includes a capacitance type keyboard 20 (see also Fig. 2) which includes a plurality of key members such as 22, 70 and 72 and which changes the capacitance of a portion of a printed circuit board when a key member is depressed in a manner that is well-known in the art. Examples of capacitance-type keyboards that may be used in the present embodiment can be found in United States Patent Nos. 4,274,752 and 4,132,487. The keyboard 20 includes 16 multi-function key members, such as the key member 22, each of which can operate in either a normal operating mode or in a volume setting mode, as will be explained later. Actuation of one of the multi-function key members (hereafter referred to in the description as key members 22) when in a volume setting mode results in a keyboard encoder 24 (Fig. 1) outputting a 4 bit binary word over a communication bus 26 to a processor 28. Example of keyboard encoders that may be used in the present invention can be found in United States Patent Nos. 3,721,976, 4,157,539, 4,502,038 and 4,414,538. As will be described more fully hereinafter, the processor 28 will output a series of control pulses over bus 30 to a tone generator 32 enabling the tone generator to output a click tone signal similar to that produced by the closing of mechanical switch contacts, the volume of which is controlled by the key member 22 depressed.

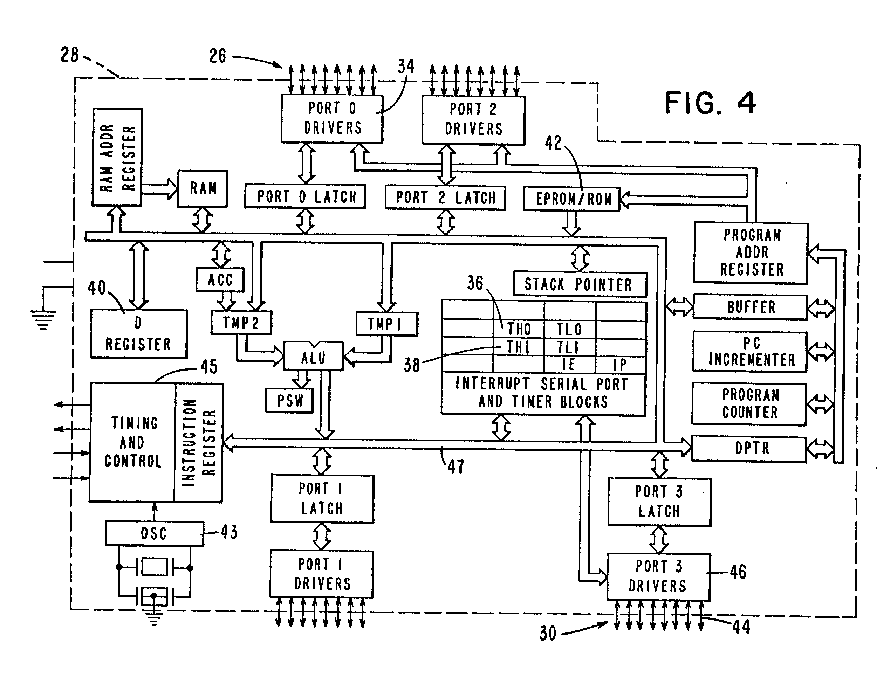

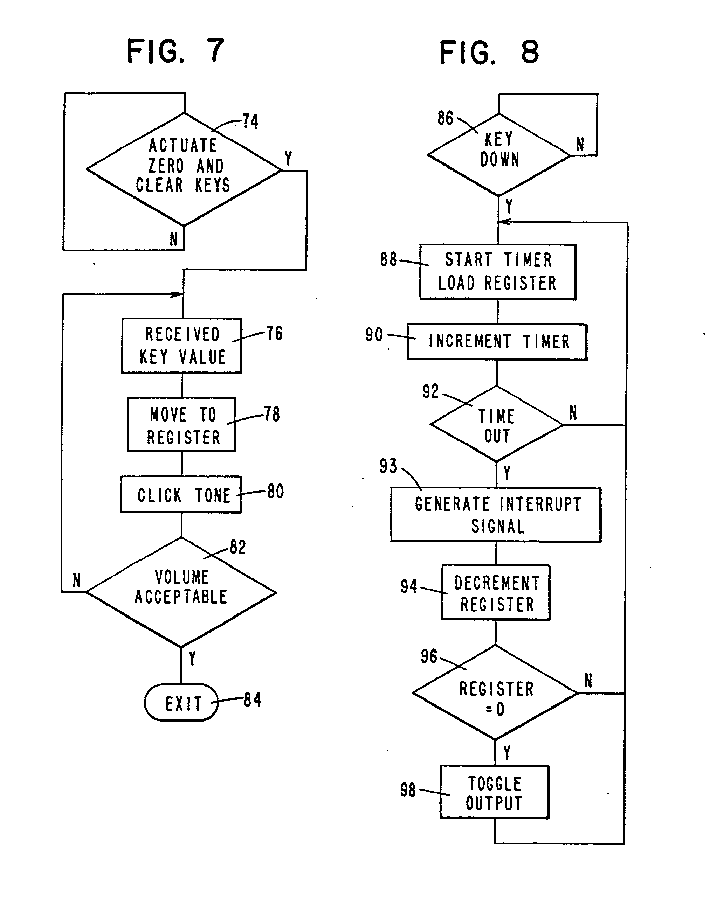

Referring now to Fig. 4, there is shown a block diagram of the processor 28 (Fig. 1) which in the present embodiment comprises an Intel 8051 microprocessor and which is commercially available from the Intel Corporation of Santa Clara, California, U.S.A. Included in the processor 28 are port drivers 34 connected to the keyboard encoder 24 (Fig. 1) over the bus 26. Further included in the processor 28 are timers 36 (TH0) and 38 (TH1) together with a storage register 40 and an EPROM/ROM memory unit 42 in which is stored the program for controlling the operation of the processor 28. The processor 28 also includes a 12 MHz oscillator 43 which supplies clock signals to a timing and control circuit 45. The circuit 45 will output over one of the lines 44 of the bus 30 through port drivers 46 a pulse train 48 (Fig. 6) at a frequency which controls the volume level of the click tone produced by the tone generator 32 in a manner to be described more fully hereinafter.

Referring now to Fig. 5, there is shown a schematic representation of the logic circuit for controlling the operation of the tone generator 32 (Fig. 1). The tone generator 32 includes a loudspeaker cone member 50 driven by a piezoelectric drive member 52. The drive member 52 is operated by an NPN transistor 54 whose base terminal 58 is connected over the relevant line 44 (Fig. 4) of the bus 30 to the processor 28. The piezoelectric member 52 is operated by the pulse train 48 (Fig. 6) appearing on this line 44 and transmitted through a dropping resistor 56 to the base terminal 58 of the transistor 54 cycling the transistor for amplifying the signal which is then transmitted to the piezoelectric member 52 at the frequency of the pulse train 48.

As shown in Fig. 3, the piezoelectric member 52 which may comprise a Sonicall SAT 2050 piezoelectric member will output a volume level (dB) in accordance with the frequency (KHz) of the pulse train 48 as illustrated by the curve 60. The piezoelectric element 52 is commercially available from the Bradgor Electronics Co. of Dayton, Ohio, U.S.A. As will be described more fully hereinafter, each of the key members 22 on the keyboard 20 when in a volume setting mode will cause a different frequency of the pulse train 48 to be produced thus controlling the volume level of the click tone outputted by the loudspeaker member 50. The transistor 54 may comprise a TI 2N2222 which is commercially available from the Texas Instruments Corporation of Dallas, Texas, U.S.A. A 1K resistor 62 is shunted across the piezoelectric member 52 for controlling the shape of the pulse train applied to the piezoelectric element 52. Further included in the circuit is a 5 volt pullup resistor 68.

Referring now to Fig. 7, there is disclosed a flowchart of the events for putting the keyboard 20 into a tone volume setting mode. This sequence is initiated by the depression of the zero key member 70 (Fig. 2) followed by the actuation of the clear key member 72 five times. This actuation of the key member 72 must occur five times (block 74) with key member 70 depressed, at which time the processor 28 will generate a pulse train 48 over the relevant line 44 enabling the loudspeaker member 50 to output a succession of beep tones indicating that the keyboard is in a volume setting mode. The operator will then depress one of the key members 22 on the keyboard 20. The depression of a key member 22 results in the encoder 24 (Fig. 1) outputting a first 4 bit binary value (block 76) representing the key member depressed. A second binary value determined by the first binary value is then stored in the register 40 (block 78). The binary value stored in the register 40 is then decremented by 256 microsecond pulse width clock signals outputted by the circuit 45 over bus 47 which register, upon reaching zero, will generate an interrupt signal enabling the circuit 45 to toggle one of the pulses of the pulse train 48 (Fig. 6) appearing on the relevant output line 44 (Fig. 5) of the port drivers 46 (Fig. 4), thus establishing the pulsewidth w (Fig. 6) of the pulse train 48. The binary value is again stored in the register 40 and the downcounting operation is again repeated to produce a pulse train 48 whose frequency is dependent on the pulse width of the pulses. This action results in the loudspeaker member 50 producing a click tone (block 80) whose volume level is determined by the frequency of the pulse train 48. If the volume level is acceptable to the operator (block 82), the mode sequence is exited (block 84) by the depression of the clear key member 72. If the volume level is unacceptable to the operator, for example because of the noise level in which the keyboard is used, a second key member 22 is depressed. This sequence of operation is again repeated by depressing other key members 22 until an acceptable volume level of the click tone is obtained. Normally, the key members 22, starting with the upper left-hand corner of the keyboard 20 (Fig. 2) and moving along a horizontal line across the keyboard, will produce succeeding higher volume levels of the click tone. After the clear key member has been activated which terminates the volume setting mode of operation and puts the keyboard 20 into a normal mode of operation, the subsequent depression of any of the key members on the keyboard 20 will output the same binary value to the processor 28 resulting in the selected volume level of the click tone signal being produced by the loudspeaker member 50.

Referring now to Fig. 8, there is shown a more detailed flowchart of the events represented in blocks 76, 78 and 80 of Fig. 7 for selecting the frequency of the pulse train 48 by the actuation of a key member 22 on the keyboard 20. The processor 28 will check (block 86) to see if any of the key members 22 on the keyboard 20 have been actuated. The processor 28, upon receiving the 4 bit binary value identifying the key member that has been depressed, will use the binary value to address a table (not shown) stored in the ROM memory unit 42 (Fig. 4) for outputting a second binary value representing the key member depressed. This second binary value of each of the selected key members 22 of the keyboard 20 has previously been determined by dividing the frequency range location under the dotted line 89 of the curve 60 (Fig. 3) by the number of key members 22 in the keyboard 20 designated to select a volume level of the click tone. The resulting incremental frequency value is then multiplied by a number representing the relative key position and the resulting second binary value is stored in the ROM memory unit 42. The keyboard 20 of the present invention, as shown in Fig. 2, includes 60 key members, 16 of which are used to select a volume level. Thus the frequency range between 1 and 4 KHz. is divided by 16 to arrive at the incremental value of frequency which is used in determining the frequency of the pulse train 48 (Fig. 6) generated as a result of a key member 22 being depressed. This second binary value representing the key member 22 depressed is then stored (block 88) in the register 40 (Fig. 4), and the timer 36 (TH0) (Fig. 4) is then started. The timer 36 will be incremented (block 90) by clock signals outputted by the timing and control unit 45 (Fig. 4). The timer 36 will timeout after 256 microseconds have elapsed. The processor 28 will then check (block 92) to see if this time-out condition has occurred. If a time-out has occurred, the timer 36 will generate an interrupt signal (block 93) to the processor 28 which enables the processor to decrement the binary value (block 94) stored in the register 40 by one. This sequence is repeated until the value of the register 40 is equal to zero. The processor 28 will continuously check the output of the register 40 (block 96) to see if this value is 0. The time required to time-out the register 40 determines the width w (Fig. 6) of each pulse of the output pulse train 48 and thus the frequency of the pulse train 48. When this time-out occurs, the processor 28 will toggle (block 98) a pulse of the output pulse train 48 by complementing the square wave signal appearing on the output line 44 (Fig. 5) at that time. The processor 28 will then again load the register 40 with the second binary value of the actuated key member resulting in the output of a pulse train 48 having a pulsewidth determined by the second binary value stored in the register 40. This operation continues for as long as the selected key member 22 is depressed.

This frequency of the pulse train 48 will operate the piezoelectric member 52 to output a click tone having a predetermined decibel level as determined by the dotted line 89 under the curve 60 (Fig. 3). After the volume level of the click tone has been selected and the clear key member 72 has been depressed so as to set the keyboard 20 to its normal mode of operation, actuation of any of the key members on the keyboard 20 will load the selected second binary value (determined by the last operated key member 22 when the keyboard 20 was in the volume setting mode) into the register 40, and the downcounting of the register is again undertaken in the manner described above. This results in the generation of the click tone at the selected volume level during the normal operation of the keyboard 20.

**Claims**

1. A keyboard sound generating system including a keyboard (20), and tone generating means (32) arranged to generate a tone in response to actuation of a key member of said keyboard, characterized in that said tone generating means (32) is arranged to generate a tone whose volume level is determined by the frequency of an input pulse signal applied thereto, and in that said keyboard (20) is settable to operate in a normal operating mode or in a volume setting mode and includes a plurality of multifunction key members (22) which can operate in a normal operating mode or in a volume setting mode depending on the mode of operation to which said keyboard (20) has been set, and further characterized by encoding means (24) coupled to said multi-function key members (22) for generating identifying data which identifies an actuated multi-function key member (22) when said keyboard (20) is in said volume setting mode, and processing means (28) coupled to said encoding means (24) and to said tone generating means (32) and arranged to produce an output pulse signal in response to identfying data generated by said encoding means (24), the frequency of said output pulse signal being determined by the actuated multi-function key member (22) corresponding to the generated identifying data, and said processing means (28) being arranged to apply said output pulse signal to said tone generating means (32) so as to determine the volume level of tones generated thereby, the volume level determined by the last operated multi-function key member (22) when said keyboard (20) is in a volume setting mode remaining unchanged when said keyboard is next set to the normal operating mode.

2. A sound generating system according to claim 1, characterized in that said processing means (28) includes storage means (40) arranged to store a binary value determined by the identifying data generated by said encoding means (24) in response to actuation of a multi-function key member (22) when in the volume setting mode, and timing means (36) for producing output signals at predetermined intervals which signals serve to progressively change the binary value stored in said storage means (40), the frequency of said output pulse signal being determined by the time taken for the binary value stored in said storage means (40) to change from the initially stored value to a predetermined value.

3. A sound generating system according to claim 2, characterized in that said timing means (36) comprises counting means which is arranged to produce one of said output signals each time said counter means counts to a predetermined count.

4. A sound generating system according to either claim 2 or claim 3, characterized in that said processing means (28) is arranged to produce an output pulse train the frequency of the pulses of which is determined by the width of the pulses, the width of each pulse being determined by the time at which the binary value stored in said storage means (40) reaches said predetermined value.

5. A sound generating system according to any one of the preceding claims, characterized in that said tone generating means (32) includes a loudspeaker member (50) and a piezoelectric drive member (52) coupled to said loudspeaker member for actuating the loudspeaker member when operated, said piezoelectric drive member being arranged to be operated by said output pulse signal (48).

6. A sound generating system according to claim 5, characterized in that said tone generating means (32) further includes amplifying means (54) connected to said piezoelectric drive member (52) and to said processing means (28) and arranged to amplify said output pulse signal and to apply this amplified signal to said drive member.

**Patentansprüche**

1. Tastenfeldtonerzeugungssystem mit einem Tastenfeld (20) und einer Tonerzeugungsvorrichtung (32), die angeordnet ist, einen Ton unter Ansprechen auf die Betätigung eines Tastenelementes des Tastenfeldes zu erzeugen, dadurch gekennzeichnet, daß die Tonerzeugungsvorrichtung (32) angeordnet ist, einen Ton zu erzeugen, dessen Lautstärkepegel bestimmt wird durch die Frequenz eines daran angelegten Eingangsimpulssignals und daß das Tastenfeld (20) einstellbar ist, um in einer normalen Betriebsart oder in einer Lautstärkeeinstellbetriebsart zu arbeiten, und eine Vielzahl von Mehrfunktionstastenelementen (22) aufweist, die in einer normalen Betriebsart oder in einer Lautstärkeeinstellbetriebsart abhängig von der Betriebsart arbeiten, auf die das Tastenfeld (20) eingestellt worden ist, und ferner gekennzeichnet durch eine Kodiervorrichtung (24), die mit den Mehrfunktionstastenelementen (22) zum Erzeugen von Identifikationsdaten gekoppelt ist, die ein betätigtes Mehrfunktionstastenelement (22) identifizieren, wenn sich das Tastenfeld (20) in der Lautstärkeeinstellbetriebsart befindet, und eine Verarbeitungsvorrichtung (26), die mit der Kodiervorrichtung (24) und der Tonerzeugungsvorrichtung (32) gekoppelt und angeordnet ist, ein Ausgangsimpulssignal unter Ansprechen auf durch die Kodiervorrichtung (24) erzeugte Identifikationsdaten zu erzeugen, wobei die Frequenz des Ausgangsimpulssignals bestimmt wird durch das betätigte Mehrfunktionstastenelement (22) entsprechend den erzeugten Identifikationsdaten, und durch eine Verarbeitungsvorrichtung (28), die angeordnet ist, ein Ausgangsimpulssignal an die Tonerzeugungsvorrichtung (32) zu legen, um den Lautstärkepegel der durch diese erzeugten Töne zu bestimmen, wobei der durch das zuletzt betätigte Mehrfunktionstastenelement (22) bestimmte Lautstärkepegel bei sich in der Lautstärkeeinstellbetriebsart befindlichem Tastenfeld (20) unverändert bleibt, wenn das Tastenfeld als nächstes in die normale Betriebsart versetzt wird.

2. Ein Tonerzeugungssystem nach Anspruch 1, dadurch gekennzeichnet, daß die Verarbeitungsvorrichtung (28) eine Speichervorrichtung (40) aufweist, die angeordnet ist, einen Binärwert zu speichern, der durch die Identifikationsdaten bestimmt wird, die durch die Kodiervorrichtung (24) unter Ansprechen auf die Betätigung eines Mehrfunktionstastenelementes (22) erzeugt werden, wenn die Lautstärkeeinstellbetriebsart vorliegt, und eine Zeitgabevorrichtung (39) zum Erzeugn von Ausgangssignalen zu bestimmten Intervallen, welche Signale für eine progressive Änderung des in der Speichervorrichtung (40) gespeicherten Binärwerts dienen, wobei die Frequenz des Ausgangsimpulssignals bestimmt wird durch die Zeit, die der in der Speichervorrichtung (40) gespeicherte Binärwert benötigt, um sich von einem anfänglich gespeicherten Wert zu einem vorbestimmten Wert zu ändern.

3. Tonerzeugungssystem nach Anspruch 2, dadurch gekennzeichnet, daß die Zeitgabevorrichtung (36) eine Zählvorrichtung umfaßt, die angeordnet ist, jedesmal dann eines der Ausgangssignale zu erzeugen, wenn die Zahlervorrichtung eine vorbestimmte Zählung zählt.

4. Tonerzeugungssystem nach Anspruch 2 oder Anspruch 3, dadurch gekennzeichnet, daß die Verarbeitungsvorrichtung (28) angeordnet ist, eine Ausgangsimpulsfolge zu erzeugen, bei der die Frequenz der Impulse bestimmt wird durch die Breite der Impulse, wobei die Breite jedes Impulses bestimmt wird durch diejenige Zeit, zu der der in der Speichervorrichtung (40) gespeichert Binarwert den vorbestimmten Wert erreicht.

5. Tonerzeugungssystem nach einem der vorhergehenden Ansprüche, dadurch gekennzeichnet, daß die Tonerzeugungsvorrichtung (32) ein Lautsprecherelement (50) und ein piezoelektrisches Treiberelement (52) aufweist, das mit dem Lautsprecherelement zur Betätigung des Lautsprecherelements bei Betätigung gekoppelt wird, wobei das piezoelektrische Treiberelement angeordnet ist, um durch das Ausgangsimpulssignal (48) betätigt zu werden.

6. Tonerzeugungssystem nach Anspruch 5, dadurch gekennzeichnet, daß die Tonerzeugungsvorrichtung (32) ferner eine Verstärkungsvorrichtung (54) aufweist, die mit dem piezoelektrischen Treiberelement (52) und der Verarbeitungsvorrichtung (28) verbunden und angeordnet ist, das Ausgangsimpulssignal zu verstärken und dieses verstärkte Signal an das Treiberelement anzulegen.

**Revendications**

1. Système de génération de sons pour un clavier comprenant un clavier (20), et des moyens (32) de génération d'un son conçus pour générer un son en réponse à l'actionnement d'une touche dudit clavier, caractérisé en ce que lesdits moyens (32) de génération d'un son sont agencés pour générer un son dont le niveau de puissance est déterminé par la fréquence d'un signal à impulsions d'entrée qui leur est appliqué, et en ce que ledit clavier (20) peut être positionné pour fonctionner dans un mode de fonctionnement normal ou dans un mode de réglage de puissance et comprend plusieurs touches (22) à fonctions multiples qui peuvent fonctionner dans un mode de fonctionnement normal ou dans un mode de réglage de puissance suivant le mode de fonctionnement dans lequel ledit clavier (20) a été positionné, et en outre caractérisé par des moyens de codage (24) couplés auxdites touches (22) à fonctions multiples afin de générer des données d'identification qui identifient une touche (22) à fonctions multiples actionnée, lorsque ledit clavier (20) est dans ledit mode de réglage de puissance, et des moyens de traitement (28) couplés auxdits moyens de codage (24) et auxdits moyens (32) de génération d'un son et agencés pour produire un signal à impulsions de sortie en réponse à des données identification générées par lesdits moyens de codage (24), la fréquence dudit signal à impulsions de sortie étant déterminée par la touche (22) à fonctions multiples actionnée correspondant aux données d'identification générées, et lesdits moyens de traitement (28) étant agencés pour appliquer ledit signal à impulsions de sortie auxdits moyens (32) de génération d'un son afin de déterminer le niveau de puissance des sons produits par ceux-ci, le niveau de puissance, déterminé par la dernière touche (22) à fonctions multiples manoeuvrée lorsque ledit clavier (20) est dans un mode de réglage de puissance, restant inchangé lorsque ledit clavier est ensuite placé dans le mode de fonctionnement normal.

2. Système de génération de sons selon la revendication 1, caractérisé en ce que lesdits moyens de traitement (28) comprennent un moyen (40) de mémorisation conçu pour mémoriser une valeur binaire déterminée par les données d'identification générées par lesdits moyens de codage (24) en réponse à l'actionnement d'une touche (22) à fonctions multiples en mode de réglage de puissance, et des moyens de synchronisation (36) destinés à produire des signaux de sortie à intervalles prédéterminés, lesquels signaux servent à modifier progressivement la valeur binaire mémorisée dans ledit moyen de mémorisation (40), la fréquence dudit signal à impulsions de sortie étant déterminée par le temps mis par la valeur binaire mémorisée dans ledit moyen (40) de mémorisation pour changer de la valeur initialement mémorisée à une valeur prédéterminée.

3. Système de génération de sons selon la revendication 2, caractérisé en ce que lesdits moyens de synchronisation (36) comprennent un moyen de comptage qui est conçu pour produire l'un desdits signaux de sortie à chaque fois que ledit moyen de comptage arrive à un compte prédéterminé.

4. Système de génération de sons selon la revendication 2 ou la revendication 3, caractérisé en ce que lesdits moyens de traitement (28) sont conçus pour produire un train d'impulsions de sortie dont la fréquence des impulsions est déterminée par la largeur des impulsions, la largeur de chaque impulsion étant déterminée par l'instant auquel la valeur binaire mémorisée dans ledit moyen (40) de mémorisation atteint la dite valeur prédéterminée.

5. Système de génération de sons selon l'une quelconque des revendications précédentes, caractérisé en ce que lesdits moyens (32) de génération d'un son comprennent un haut-parleur (50) et un élément de commande piézoélectrique (52) couplé audit haut-parleur pour actionner le haut-parleur lorsqu'il est mis en action, ledit élément de commande piézoélectrique étant conçu pour être mis en action par ledit signal (48) à impulsions de sortie.

6. Système de génération de sons selon la revendication 5, caractérisé en ce que lesdits moyens (32) de génération d'un son comprennent en outre un moyen d'amplification (54) connecté audit élément de commande piézoélectrique (52) et audit moyen de traitement (28) et conçu pour amplifier ledit signal à impulsions de sortie et pour appliquer ce signal amplifié audit élément de commande.

# FIG. 1

KEYBOARD · ENCODER ↔ PROCESSOR ⇒ TONE GENERATOR

# FIG. 5

+28V  +5V

32

52 62 — 1K

50 54 56 — 1K  VCC

58  68 — 4.7K

44

# FIG. 6

W  48

1

# FIG. 2

| 22 ⌐ | | | 20 ⌐ | | | |
|------|------|------|------|------|------|------|
| 01 | 02 | 03 | 04 | 05 | 06 | 07 |
| 08 | 09 | 0A | 0B | 0C | 0D | 0E |
| 0F | 10 | 11 | 12 | 13 | 14 | 15 |
| 16 | 17 | 18 | 19 | 1A | 1B | 1C |
| 1D | 1E | 1F / 20 / 21 | 22 | 23 | 24 | — 72 |
| 25 | 26 | 27 / 28 / 29 | 2A | 2B | 2C | |
| 2D | 2E | 2F / 30 / 31 | 32 | 33 | 34 | |
| 35 | 36 | 0 / 38 / 39 | 3A | 3B | 3C | |

70 ⌐

# FIG. 3

FIG. 4

# FIG. 7

```
        ┌──────────────┐
        │   ACTUATE    │ Y
        │  ZERO AND    │────┐   74
        │  CLEAR KEYS  │    │
        └──────────────┘    │
              N             │
              │             │
              ▼             │
        ┌──────────────┐    │
        │  RECEIVED    │─ 76│
        │  KEY VALUE   │    │
        └──────────────┘    │
              │             │
        ┌──────────────┐    │
        │   MOVE TO    │─ 78│
        │  REGISTER    │    │
        └──────────────┘    │
              │             │
        ┌──────────────┐    │
        │  CLICK TONE  │─ 80│
        └──────────────┘    │
              │             │
        ┌──────────────┐    │
     N  │   VOLUME     │ 82 │
     ───│ ACCEPTABLE   │    │
        └──────────────┘    │
              Y
              │
        ┌──────────┐
        │   EXIT   │─ 84
        └──────────┘
```

# FIG. 8

```
        ┌──────────────┐
    86  │     KEY      │ N
    ────│    DOWN      │────┐
        └──────────────┘    │
              Y             │
              │             │
        ┌──────────────┐    │
    88  │ START TIMER  │    │
    ────│ LOAD REGISTER│    │
        └──────────────┘    │
              │             │
        ┌──────────────┐    │
    90  │  INCREMENT   │    │
    ────│    TIMER     │    │
        └──────────────┘    │
              │             │
    92  ┌──────────────┐ N  │
    ────│    TIME      │────┤
        │    OUT       │    │
        └──────────────┘    │
              Y             │
    93  ┌──────────────────┐│
    ────│GENERATE INTERRUPT││
        │     SIGNAL       ││
        └──────────────────┘│
              │             │
    94  ┌──────────────┐    │
    ────│  DECREMENT   │    │
        │  REGISTER    │    │
        └──────────────┘    │
              │             │
    96  ┌──────────────┐ N  │
    ────│  REGISTER    │────┤
        │    = 0       │    │
        └──────────────┘    │
              Y             │
    98  ┌──────────────┐    │
    ────│   TOGGLE     │    │
        │   OUTPUT     │────┘
        └──────────────┘
```

4